# EUROPEAN PATENT APPLICATION

(11) **EP 4 787 601 A1**
(43) Date of publication of application: **05.08.2026**
(21) Application number: 25227363.6
(22) Date of filing: 29.12.2025
(51) Int. Cl.: H01M 50/503, H01M 50/507, H01M 50/516, H01M 50/533, H01M 50/536, H01M 50/54

(54) **POWER STORAGE MODULE AND POWER STORAGE MODULE MANUFACTURING METHOD**

(30) Priority: 04.02.2025 JP 2025016856
(71) Applicant: Toyota Jidosha Kabushiki Kaisha, Toyota-shi, Aichi-ken 471-8571 (JP)
(72) Inventor: ZHANG, Dexu, Toyota-shi, 471-8571 (JP)
(74) Representative: TBK

(57) **Abstract**

A power storage module according to an aspect of the present disclosure comprises a power storage cell equipped with an electrode terminal, and a conductive member comprising an electrical connection section to be connected to the electrode terminal. When viewed along a direction in which the conductive member and the electrode terminal oppose each other, the electrical connection section comprises a first portion at which a peripheral edge portion thereof is positioned further inside than a peripheral edge portion of the electrode terminal, and a second portion positioned further outside than the peripheral edge portion of the electrode terminal.

## Description

### BACKGROUND

### Technical Field

The present disclosure relates to a power storage module and to a power storage module manufacturing method.

### Related Art

A power storage module is known that, for example as disclosed in Japanese Patent Application Laid-Open (JP-A) No. 2018-181780, is configured as a power supply source with plural power storage cells (for example, lithium-ion batteries) connected together by a conductive member (bus bar or the like). In such power storage modules, there is demand to make the conducting distance of the bus bar small and to make the conducting cross-section large in order to suppress the generation of heat in the bus bar arising from large current generation.

However, in cases in which the conducting cross-section has been made large, there is an unwanted increase in rigidity of the conductive member, with this making assembly of the conductive member more difficult and also causing a drop in anti-fatigue properties.

There is accordingly a demand to accurately connect a conductive member to a power storage cell without positional misalignment.

The present disclosure provides a power storage module enabling a conductive member to be accurately connected to an electrode terminal without positional misalignment even though the conducting cross-section of the conductive member has been increased, and provides a manufacturing method of the same.

### SUMMARY

A manufacturing method of a power storage module of a first aspect is a power storage module manufacturing method that manufactures a power storage module by assembling and welding a conductive member comprisig an electrical connection section to be connected to an electrode terminal to a power storage cell provided with the electrode terminal. When viewed along a direction in which the conductive member and the electrode terminal oppose each other in a state in which assembly has been completed, the electrical connection section comprises a first portion at which a peripheral edge portion of the electrical connection section is positioned further inside than a peripheral edge portion of the electrode terminal, and a second portion at which the peripheral edge portion of the electrical connection section is positioned further outside than the peripheral edge portion of the electrode terminal. The manufacturing method comprises a step of positioning the conductive member with respect to the power storage cell in a direction along a flat face of the conductive member executed such that the electrode terminal is visible from the first portion and is not visible from the second portion, and a step of positioning of the conductive member with respect to the power storage cell in a direction perpendicular to the flat face of the conductive member executed by irradiating measurement light through an inspection hole piercing through the conductive member. This manufacturing method enables accurate connection of the conductive member without positional misalignment with respect to the electrode terminal, even with an increased surface area of the conductive member with respect to the electrode terminal.

A manufacturing method of a second aspect is the manufacturing method of the first aspect, wherein execution of the step of positioning the conductive member with respect to the power storage cell in the direction perpendicular to the flat face of the conductive member comprises; as well as irradiating the measurement light through the inspection hole, also irradiating the measurement light toward a surface of the conductive member and measuring a distance from a specific position to the surface of the conductive member and a distance from the specific position to the electrode terminal. This thereby enables a distance between the conductive member and the electrode terminal to be accurately measured, and enables positioning of the conductive member to be performed accurately in the perpendicular direction.

A power storage module of a third aspect comprises a power storage cell comprising an electrode terminal, and a conductive member comprising an electrical connection section to be connected to the electrode terminal. When viewed along a direction in which the conductive member and the electrode terminal oppose each other, the electrical connection section comprises a first portion at which a peripheral edge portion of the electrical connection section is positioned further inside than a peripheral edge portion of the electrode terminal, and a second portion at which a peripheral edge portion of the electrical connection section is positioned further outside than the peripheral edge portion of the electrode terminal. This thereby enables the conductive member to be accurately connected to the electrode terminal without positional misalignment even with an increased surface area of the conductive member with respect to the electrode terminal.

A power storage module of a fourth aspect is the third aspect, wherein the electrical connection section comprises an inspection hole that is pierced through at a position opposing the electrode terminal and that is configured so as to enable measurement light used for displacement measurement to pass through. Positioning with respect to the electrode terminal can be executed by irradiating the measurement light through the inspection hole.

Furthermore, a power storage module of a fifth aspect is the fourth aspect, wherein the electrode terminal comprises a main body and an electrical contact portion that projects from the main body, and when the main body is viewed from the first portion, the conductive member is positioned such that a position of the inspection hole and a position of the electrical contact portion are aligned. Such a configuration enables finer positional alignment of the conductive member with respect to the electrode terminal to be executed by checking the first portion and the inspection hole.

A power storage module of a sixth aspect is the fifth aspect, wherein the first portion is provided to a first edge of the electrical connection section and at a second edge of the electrical connection section intersecting with the first edge. Such an aspect configuration enables positional alignment between the conductive member and the electrode terminal to be executed more accurately.

A power storage module of a seventh aspect may be configured by any one of the above power storage modules, wherein the conductive member comprises a layered structure section that connects between plural of the electrical connection sections. The layered structure section may be configured by sparsely stacking plural conductive layers, and the electrical connection sections may each be configured by stacking the plural conductive films more densely than in the layered structure section. This aspect enables easier assembly of the conductive member to the power storage cell.

The present disclosure enables provision of a power storage module enabling a conductive member to be accurately connected to an electrode terminal without positional misalignment even though a surface area of the conductive member has been increased with respect to the electrode terminal, and provides a manufacturing method of the same.

### BRIEF DESCRIPTION OF THE DRAWINGS

Exemplary embodiments of the present invention will be described in detail based on the following figures, wherein:
Fig. 1 is a plan view of a power storage cell 10 used in a power storage module of an exemplary embodiment;
Fig. 2 is a schematic perspective view of a power storage module configured by plural power storage cells 10 electrically connected together by bus bars 20;
Fig. 3 is a plan view and cross-sections for explaining the structure of a bus bar 20 in more detail;
Fig. 4 illustrates a cross-section of a layered structure section 21 and an electrical connection section 22; and
Fig. 5 is a schematic diagram to explain positional alignment of the bus bar 20 in a horizontal direction.

### DETAILED DESCRIPTION

Description follows regarding an exemplary embodiment, with reference to the appended drawings. The same reference numerals in the appended drawings sometimes indicate elements that are functionally the same. Note that the appended drawings illustrate an exemplary embodiment and implementation example in accordance with the principles of the present disclosure, however they are merely to enable understanding of the present disclosure and must not to be used to limit the interpretation of the present disclosure. Statements in the present specification merely give typical examples, and are not limitations to the scope of the patent claims of the present disclosure nor to applications thereof.

Although an exemplary embodiment is described in sufficient detail to enable a person of ordinary skill in the art to implement the present disclosure, other examples/embodiments are possible and it must be understood that changes to the configuration/structure and substitutions of various elements may be made without deviating from the technical scope and spirit of the present disclosure. The following statements should accordingly not be taken as limitations thereof.

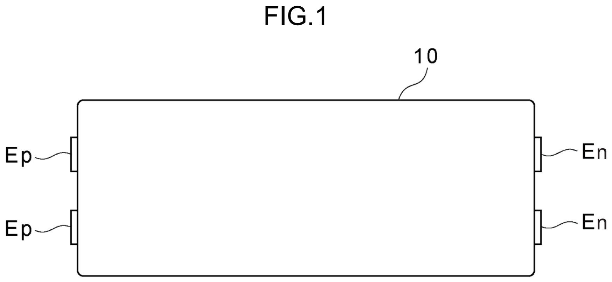

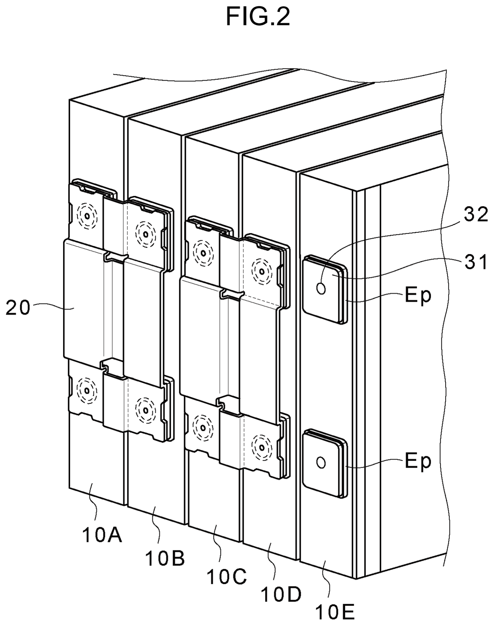

Description follows regarding a power storage module according to an exemplary embodiment, with reference to Fig. 1 and Fig. 2. Fig. 1 is a plan view of a power storage cell 10 used in a power storage module of the present exemplary embodiment. As illustrated in Fig. 2, plural power storage cells 10 (five power storage cells 10A to 10E in Fig. 2) are electrically connected together by bus bars 20 serving as conductive members, such that a single power storage module is configured by the plural power storage cells 10 connected together in series in this manner.

The power storage cell 10 has a substantially rectangular profile overall, as illustrated in Fig. 1, and is provided with positive electrode terminals Ep on one face thereof, and with negative electrode terminals En on a face on the opposite side thereof. In the example of Fig. 1, there are two of the positive electrode terminals Ep provided in a row on the one face, and similarly there are two of the negative electrode terminals En provided on the face on the opposite side, however the number of and array of the electrode terminals is not limited to the illustrated example.

As illustrated in Fig. 2, the plural power storage cells 10 (10A to 10E) are arrayed with adjacent of the power storage cells 10 in opposite orientations, such that the positive electrode terminals Ep and the negative electrode terminals En are alongside each other on the same side. The positive electrode terminals Ep and the negative electrode terminal En that are alongside each other on the same side are connected to electrical connection sections of the bus bars 20, so as to obtain a configuration in which the plural power storage cells 10 are connected together in series. The bus bars 20 each connect four electrode terminals of two adjacent power storage cells 10 together and have a substantially rectangular shaped profile in plan view. In other words, the bus bars 20 are each configured as a conductive member of large conducting surface area so as to straddle between a pair of positive electrode terminals Ep and a pair of negative electrode terminals En, with the respective electrode terminals Ep or En alongside each other in the vertical direction. However, irrespective of the large conducting surface area, the bus bars 20 are suppressed to a low rigidity due to having a shape as described later, and are easily assembled to the power storage cell 10 and configured with structure having high anti-fatigue properties. Note that both the positive electrode terminals Ep and the negative electrode terminals En each include a rectangular shaped main body 31, and an electrical contact portion 32 that projects out from a central portion of the main body 31. The electrical contact portion 32 may be electrically connected to the bus bar 20 by welding. A length of one edge of the main body 31 may, as an example, be about from 10 mm to 20 mm.

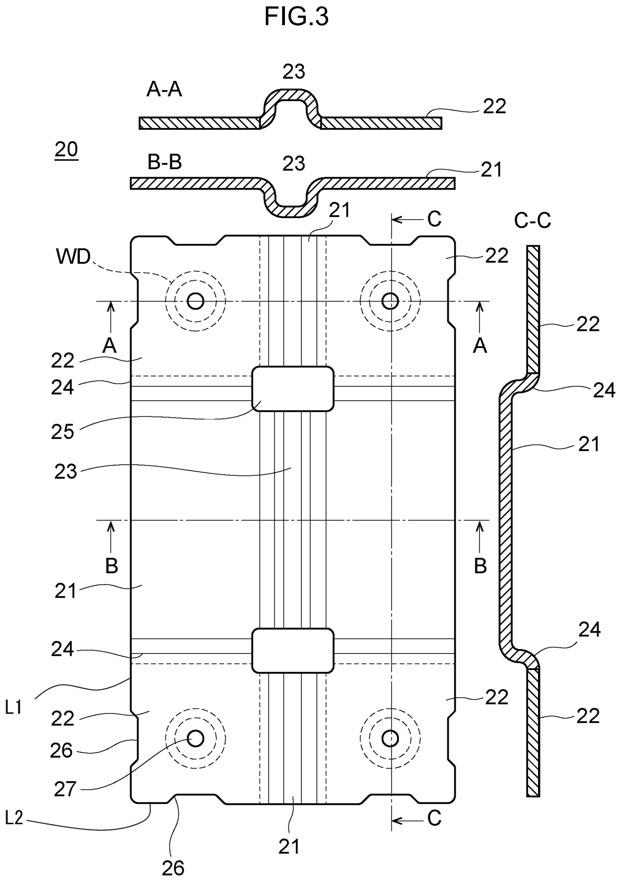

More detailed description follows regarding a structure of the bus bar 20, with reference to Fig. 3. Fig. 3 illustrates a plan view of the bus bar 20 at the center, with cross-sections A-A, B-B, and C-C of the plan view illustrated at the side of and above the plan view. The bus bar 20 is configured including a layered structure section 21, electrical connection sections 22, a longitudinal bend portion 23, crosswise bend portions 24, and rectangular slits 25. The longitudinal bend portion 23 and the crosswise bend portions 24 configure part of the layered structure section 21. Note that the annotation WD in Fig. 3 indicates an external profile of a welding mark formed in the vicinity of each of the electrical contact portions 32. The size of the welding mark may, as an example, be slightly larger than the electrical contact portion 32 at about from 6 mm to 7 mm.

The layered structure section 21 is configured from a conductive metal (copper, aluminum, or the like), and configures a main part of the bus bar 20. The electrical connection sections 22 are portions to be connected to the electrical contact portions 32 of the electrode terminals Ep, En of the power storage cells 10, and are similarly also configured from a conductive metal. The longitudinal bend portion 23 and the crosswise bend portions 24 are part of the layered structure section 21, and are configured by bending a conductive metal in the manner described later. The rectangular slits 25 are formed in the vicinity of boundaries between the layered structure section 21 and the electrical connection sections 22. The rectangular slits 25 are formed by punching a metal plate, and are formed so as to enable processing of the longitudinal bend portion 23 and the crosswise bend portions 24.

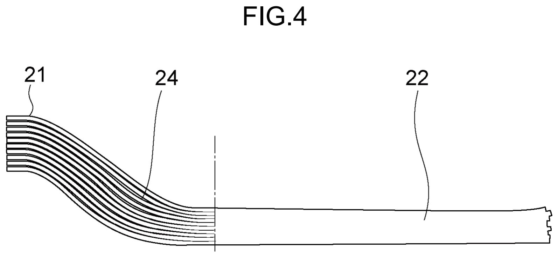

The bus bar 20 is configured as a whole by plural conductive films that have been stacked. The layered structure section 21 and the electrical connection section 22 are also both configured by stacking the plural conductive films, however they differ in the size of gaps between the plural conductive films. As illustrated in Fig. 4, the layered structure section 21 is not subjected to diffusion bonding, and is configured such that there is a constant void between the plural individual conductive films. However, the electrical connection sections 22 are subjected to diffusion bonding or the like, such that the plural conductive films are compressed and integrated together without any substantial voids remaining therebetween. In other words, the layered structure section 21 is configured with the plural conductive films sparsely stacked, and the electrical connection sections 22 are configured by stacking the plural conductive films more densely than in the layered structure section 21.

In the example of Fig. 3, the electrical connection sections 22 are formed divided into four rectangular shaped corner portions of the bus bar 20 (positions corresponding to the positive electrode terminals Ep and the negative electrode terminals En), and the layered structure section 21 (including the longitudinal bend portion 23 and the crosswise bend portions 24) is formed in substantially cross shapes so as to divide the electrical connection sections 22, however, there is no limitation thereto. The electrical connection sections 22 are formed at positions on the bus bar 20 corresponding to the positions of the electrode terminals Ep, En, and the layered structure section 21 is formed at other positions. The structure illustrated as an example in Fig. 3 is a structure corresponding to an array of electrode terminals as illustrated in Fig. 1, and the arrangement and profile of the layered structure section 21 and the electrical connection sections 22 obtained are different in cases in which the number and array pattern of the electrode terminals are different.

The layered structure section 21 is formed in this manner such that there are voids remaining between the conductive films, and so has a higher flexibility than in the electrical connection sections 22, with this meaning that the bus bars 20 are easily assembled to the power storage cells 10 and also have high anti-fatigue properties. Expansion and contraction damage arising from deterioration of the power storage cells 10 or fluctuations in charging rates thereof is absorbed by the layered structure section 21, enabling high anti-fatigue properties to be raised.

Bending of the conductive films is performed between the layered structure section 21 and the electrical connection sections 22, such that the crosswise bend portions 24 are provided at the boundaries between the layered structure section 21 and the electrical connection sections 22. The crosswise bend portions 24 are bent from the layered structure section 21 toward the electrical connection sections 22 and, in the example illustrated in Fig. 3, the layered structure section 21 is seen as being further away from the power storage cells 10 when assembled, and the electrical connection sections 22 are seen as being nearer to the power storage cells 10 when assembled, with the crosswise bend portions 24 being bent so as to connect therebetween (see cross-section C-C).

Moreover, bending of the layered structure section 21 is also performed in the longitudinal direction, with the longitudinal bend portion 23 formed thereby as part of the layered structure section 21 substantially in the vicinity of a crosswise direction center of the bus bar 20. In the example of Fig. 3, the longitudinal bend portion 23 is formed so as to protrude downwards in the vicinity of the center of the bus bar 20 so as to project toward the power storage cell 10 side when assembled, and the longitudinal bend portion 23 is formed so as to protrude upward and project in a direction away from the power storage cell 10 when assembled at positions between the upper and lower pairs of the electrical connection sections 22 (see cross-sections B-B and A-A). This means that the longitudinal bend portion 23 is divided by the rectangular slits 25 in the vicinity of the boundaries between the layered structure section 21 and the electrical connection sections 22. However, there is no limitation to such a structure and, for example, the longitudinal bend portion 23 may be configured so as to protrude upward across its entirety. However, adopting the profile so as to protrude downward in the vicinity of the center of the bus bar 20 and protrude upward at positions between the upper and lower pairs of the electrical connection sections 22, as illustrated in Fig. 3, enables a smaller thickness and stack height of the power storage module (enables a higher energy density).

Cut-outs 26 are provided in an outer edge portion of each of the electrical connection sections 22, such that part of the positive electrode terminals Ep and part of the negative electrode terminals En are visible from face-on during assembly of the bus bar 20 to the power storage cells 10. The depth from outer edge portions of the cut-outs 26 may, as an example, be about from 1 mm to 3 mm. The positive electrode terminals Ep and the negative electrode terminals En are covered by the electrical connection sections 22 at portions thereof other than at the cut-outs 26, such that the positive electrode terminals Ep and the negative electrode terminals En are not visible when viewed along the direction in which the bus bar 20 and the electrode terminals oppose each other. In other words, when viewed from this direction in a state in which the bus bar 20 has been completely assembled to the power storage cells 10, each of the electrical connection sections 22 includes first portions (at the cut-outs 26) where a peripheral edge portion is positioned further inside than a peripheral edge portion of the electrode terminal (the main body 31), and a second portion (a portion not at the cut-outs 26) where the peripheral edge portion is positioned further outside than the peripheral edge portion of the electrode terminal. Providing the cut-outs 26 in this manner enables positioning between the electrode terminals Ep, En and the bus bar 20 to be executed at high accuracy prior to welding.

Note that the cut-outs 26 may, as illustrated in the example of Fig. 3, be provided on both side edges L1 (first edges) and base edges L2 (second edges intersecting with the first edges) of the electrical connection sections 22, or may be provided to one thereof. Providing the cut-outs on both the side edges and the base edges enables more accurate positioning of the bus bar 20 with respect to the electrode terminals Ep, En to be performed. Moreover, plural cut-outs may be provided on a single edge. Furthermore, the profile of the cut-outs 26 is not limited to the trapezoidal profile as illustrated and, for example, a circular arc profile, a triangular profile, or the like may be adopted as long as the main body 31 is visible below through the cut-outs 26 when positioning has been performed.

Moreover, inspection holes 27 are provided in the electrical connection sections 22 at positions corresponding to apexes of the positive electrode terminals Ep and the negative electrode terminals En. The inspection holes 27 are formed so as to pierce through the electrical connection sections 22, and the inspection holes 27 are formed with a size that enables laser light to pass through and be reflected back from the electrode terminals. A diameter of the inspection holes 27 may, as an example, be about from 2 mm to 4 mm.

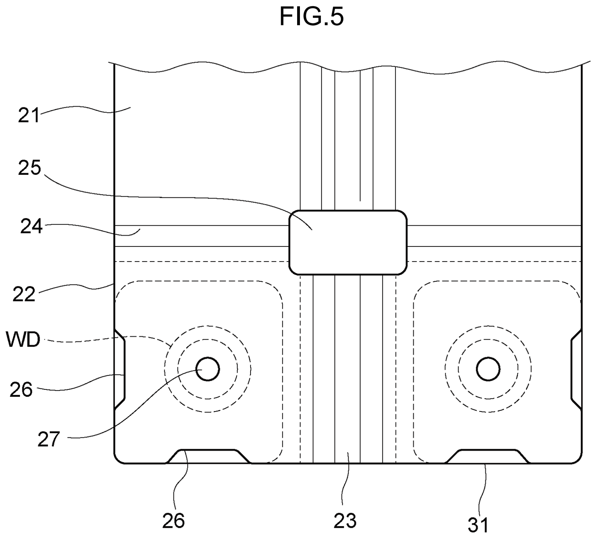

When performing assembly and welding of the bus bars 20 to the power storage cell 10 and manufacturing the power storage module, positioning of the bus bar 20 with respect to the positive electrode terminals Ep and the negative electrode terminals En is performed in a horizontal direction (a direction along the flat face of the bus bar 20) and positioning is also performed in a perpendicular direction. As illustrated in Fig. 5, the horizontal direction positioning of the bus bars 20 is performed by a non-illustrated camera, with positioning performed such that although the positive electrode terminals Ep and the negative electrode terminals En are visible through the cut-outs 26, they are not visible other than at the cut-outs 26.

Positioning of the bus bar 20 in the perpendicular direction may be performed by irradiating laser light (measurement light) from a non-illustrated laser displacement sensor toward the inspection holes 27 and a surface of the electrical connection sections 22 of the bus bar 20. A distance D1 from a head of the non-illustrated laser displacement sensor to the top face of the bus bar 20, and a distance D2 from the head of the laser displacement sensor to the top face of the electrode terminals, are measured. The position of the bus bars 20 in the perpendicular direction can then be adjusted such that D2 - D1 - d is a desired value in consideration of a thickness d of the electrical connection sections 22 of the bus bar, and then welding executed. Note that a reference position for the measurement of the distances D is not limited to being the position of the head of the laser displacement sensor, and another specific position may be used therefor.

Although this completes description of an exemplary embodiment, the present disclosure is not limited to the above exemplary embodiment, and encompasses various modified examples thereof. For example, although detailed description has been given in the above exemplary embodiment so as to facilitate understanding of the present disclosure, there is no limitation to necessarily always including all of the configuration described above. Moreover, other configuration may be used to replace part of the configuration of the above exemplary embodiment, and other configuration may be added to the configuration of the above exemplary embodiment.

## Claims

1. A manufacturing method of a power storage module which manufactures a power storage module by assembling and welding a conductive member (20), comprising an electrical connection section (22, 32) to be connected to an electrode terminal (Ep, En), to a power storage cell (10, 10A to 10E) provided with the electrode terminal (Ep, En), wherein:
when viewed along a direction in which the conductive member (20) and the electrode terminal (Ep, En) oppose each other in a state in which assembly has been completed, the electrical connection section (22, 32) comprises a first portion (26) at which a peripheral edge portion of the electrical connection section (22, 32) is positioned further inside than a peripheral edge portion of the electrode terminal (Ep, En), and a second portion at which the peripheral edge portion of the electrical connection section (22, 32) is positioned further outside than the peripheral edge portion of the electrode terminal (Ep, En); and
the manufacturing method comprises:
a step of positioning the conductive member with respect to the power storage cell (10, 10A to 10E) in a direction along a flat face of the conductive member (20), executed such that the electrode terminal (Ep, En) is visible from the first portion (26) and is not visible from the second portion, and
a step of positioning the conductive member (20) with respect to the power storage cell (10, 10A to 10E) in a direction perpendicular to the flat face of the conductive member (20), executed by irradiating measurement light through an inspection hole (27) piercing through the conductive member (20).

2. The power storage module manufacturing method of claim 1, wherein:
the step of positioning the conductive member (20) with respect to the power storage cell (10, 10A to 10E) in the direction perpendicular to the flat face of the conductive member (20) comprises:
as well as irradiating the measurement light through the inspection hole (27), irradiating the measurement light toward a surface of the conductive member (20) and measuring a distance from a specific position to the surface of the conductive member (20) and a distance from the specific position to the electrode terminal (Ep, En).

3. A power storage module comprising:
a power storage cell (10, 10A to 10E) comprising an electrode terminal (Ep, En); and
a conductive member (20) comprising an electrical connection section (22, 32) to be connected to the electrode terminal (Ep, En); wherein,
when viewed along a direction in which the conductive member (20) and the electrode terminal (Ep, En) oppose each other, the electrical connection section (22, 32) comprises:
a first portion (26) at which a peripheral edge portion of the electrical connection section (22, 32) is positioned further inside than a peripheral edge portion of the electrode terminal (Ep, En), and
a second portion at which the peripheral edge portion of the electrical connection section (22, 32) is positioned further outside than the peripheral edge portion of the electrode terminal (Ep, En).

4. The power storage module of claim 3, wherein the electrical connection section (22, 32) comprises an inspection hole (27) that is pierced through at a position opposing the electrode terminal (Ep, En) and that is configured so as to enable measurement light used for displacement measurement to pass through.

5. The power storage module of claim 4, wherein:
the electrode terminal (Ep, En) comprises a main body (31) and an electrical contact portion (32) that projects from the main body (31); and
when the main body (31) is viewed at the first portion (26), the conductive member (20) is positioned such that a position of the inspection hole (27) and a position of the electrical contact portion (32) are aligned.

6. The power storage module of claim 5, wherein the first portion (26) is provided at a first edge (L1) of the electrical connection section (22, 32) and at a second edge (L2) of the electrical connection section (22, 32) intersecting with the first edge (L1).

7. The power storage module of any one of claim 3 to claim 6, wherein:
the conductive member (20) comprises a layered structure section (21) that connects between a plurality of electrical connection sections (22, 32);
the layered structure section (21) is configured by sparsely stacking a plurality of conductive films; and
the electrical connection sections (22, 32) are each configured by stacking the plurality of conductive films more densely than in the layered structure section (21).
